# EUROPÄISCHE PATENTSCHRIFT

(11) **EP 1 289 796 B1**
(45) Veröffentlichungstag und Bekanntmachung des Hinweises auf die Patenterteilung: **03.03.2004**
(21) Anmeldenummer: 00958161.2
(22) Anmeldetag: 14.07.2000
(51) Int. Cl.: B60Q 1/14, B60S 1/08

(54) **LICHTEMPFINDLICHE SENSOREINHEIT, INSBESONDERE ZUM AUTOMATISCHEN SCHALTEN VON BELEUCHTUNGSEINRICHTUNGEN**
LIGHT-SENSITIVE SENSOR UNIT, ESPECIALLY FOR AUTOMATIC SWITCHING OF LIGHTING DEVICES
UNITE DE DETECTION PHOTOSENSIBLE, NOTAMMENT POUR LA COMMUTATION AUTOMATIQUE DE DISPOSITIFS D'ECLAIRAGE

(30) Priorität: 17.07.1999 DE 19933641; 17.07.1999 DE 19933642
(43) Veröffentlichungstag der Anmeldung: 12.03.2003
(73) Patentinhaber: ROBERT BOSCH GMBH, 70442 Stuttgart (DE)
(72) Erfinder: SCHMITT, Patrick, D-77839 Lichtenau (DE); HOG, Norbert, D-77815 Buehl (DE); GILLE, Andreas, D-77815 Buehl (DE); HODAPP, Bruno, D-77855 Achern-Oensbach (DE); MICHENFELDER, Gehbard, D-77839 Lichtenau (DE); PIENTKA, Rainer, D-77871 Renchen (DE); MEIER, Hans, D-77833 Ottersweier (DE); BLITZKE, Henry, D-77815 Buehl (DE); BURKART, Manfred, D-76473 Iffezheim (DE)
(86) Internationale Anmeldenummer: PCT/DE2000/002344
(87) Internationale Veröffentlichungsnummer: WO 2001/005626

(56) Entgegenhaltungen:
- DE-A- 19 630 216
- DE-A- 19 704 818
- DE-A- 19 839 273
- PATENT ABSTRACTS OF JAPAN vol. 007, no. 187 (M-236), 16. August 1983 (1983-08-16) & JP 58 089430 A (NIPPON DENSO KK), 27. Mai 1983 (1983-05-27)

## Beschreibung

### Stand der Technik

Die Erfindung geht aus von einer lichtempfindlichen Sensoreinheit, insbesondere zum automatischen Schalten von Beleuchtungseinrichtungen bei Fahrzeugen, nach Gattung des Anspruchs 1.

Eine solche Sensoreinheit ist durch die gattungsgemäße DE 195 23 262 bekannt, die einen Globalsensor und einen Richtungssensor umfaßt, durch welche die Lichtverhältnisse außerhalb des Fahrzeugs erfaßt werden. Die Sensoreinheit ist mit der Auswerteeinrichtung verbunden, in der aus den Signalen der Sensoreinheit ermittelt wird, ob bei den aktuell vorliegenden Lichtverhältnissen in der Umgebung des Fahrzeugs eine Änderung des Schaltzustandes der Beleuchtungseinrichtungen erforderlich ist. Diese bekannte Sensoreinheit läßt zwar eine automatische Schaltung der Beleuchtungseinrichtungen zu, jedoch umfaßt sie durch die Global- und Richtungssensorik relativ viele Teile, was erhebliche Kosten sowie eine aufwendige Justage verursacht.

### Vorteile der Erfindung

Die erfindungsgemäße Einrichtung mit den Merkmalen des Anspruchs 1 hat den Vorteil, daß durch die Integration von Global- und Richtungssensorik eine einfache, kompakte, robuste, leicht zu montierende und praktisch justagefreie Sensoreinheit zur Verfügung steht. Dazu umfaßt die Einrichtung nur eine minimale Anzahl von Bauteilen was eine einfache und kostengünstige Produktion bei erweiterter Funktionalität ermöglicht. Da auf Windschutzscheiben von Kraftfahrzeugen die Größe sichtbehindernder Komponenten gering gehalten werden soll, erweisen sich die geringen Abmessungen welche durch die Integration von Global- und Richtungssensorik möglich sind, als weiterer großer Vorteil. Durch die Integration des Lichtleitkörpers der Sensoreinheit in einen Lichtleitkörper einer Regensensoreinrichtung können weitere Bauteile eingespart werden und die Anzahl der sichtbehindernden Komponenten auf der Windschutzscheibe noch weiter reduziert werden

Insbesondere dann, wenn der Lichtleitkörper in einem mehrkomponentigen Spritzgußverfahren zusammen mit dem Lichtleitkörper des Regensensors und dem Koppelmedium hergestellt ist können weitere Arbeitsschritte eingespart werden.

Durch die in den Unteransprüchen aufgeführten Merkmale sind vorteilhafte Weiterbildungen der Sensoreinheit nach dem Hauptanspruch möglich.

Dadurch, daß mindestens drei Sensoren Licht aus vorbestimmten Richtungen detektieren, wird ein weiter Bereich vor dem Fahrzeug erfaßt.

Wenn mindestens ein Sensor in Fahrtrichtung sowie die beiden weiteren Sensoren beidseitig um einen Winkel α aus der Fahrtrichtung herausgeschwenkten Winkel angeordnet sind ergibt sich vor dem Fahrzeug ein breiter Erfassungskegel, so daß auch Tunneleinfahrten, die noch nicht in Fahrtrichtung liegen, erfaßt werden und die Beleuchtungseinrichtung entsprechend gesteuert werden kann.

Weisen die Richtungssensoren linsenartige Elemente auf, welche auch ineinander übergehen können, kann der Erfassungskegel individuell auf die Wünsche des Fahrzeugherstellers abgestimmt werden.

Gehen die Lichtleitelemente ineinander über, so kann weiter Bauraum gespart werden und die Sensoreinheit weiter minimiert werden.

Können die Sensorelemente Tages- und Kunstlicht unterscheiden, kann verhindert werden, daß die Beleuchtungseinrichtungen bei Tunnelfahrten in heller Beleuchtung abgeschaltet werden.

Vorteilhaft in der erfindungsgemäßen Sensoreinheit ist ausserdem eine wesentliche Verbesserung des Ansprechverhaltens der Regensensoreinrichtung welche sich durch die Erhöhung des Verhältnises von sensitiver Fläche zur Auflagefläche im Vergleich zu üblichen Regensensoren einstellt. Dies wird durch die trapezförmige Anordung der Sender und Empfänger erreicht. Durch die länglich zusammenhängende sensitive Fläche, wird die Wahrscheinlichkeit, daß ein auf der Scheibe befindlicher Regentropfen durch den Fahrtwind auf die sensitive Fläche driftet erhöht, was eine deutliche Verbesserung des Ansprechverhaltens zur Folge hat.

Durch die Verwendung mehrerer Empfänger pro Sender wird die Anzahl der Meßstrecken und damit die Anzahl der sensitiven Flächen erhöht, was einen weiteren Kostenvorteil ergibt.

Derselbe Effekt tritt auf, wenn mehrere Sender und nur ein Empfänger verwendet werden. Werden zwei Sender und zwei Empfänger eingesetzt, können vier Meßstrecken und damit vier sensitive Flächen erzielt werden. Ist der Abstand der zwei Sender von dem Abstand der zwei Empfänger etwa doppelt so groß, ergibt sich eine besonders gleichmäßige Anordnung der sensitiven Flächen.

Weiter erweist es sich als vorteilhaft, die Regensensoreinrichtung so auf der Scheibe zu befestigen, daß die Sender in Einbaulage auf der unteren Parallelen und die Empfänger auf der oberen Parallelen des Trapezes angeordnet sind. Sonneneinstrahlung, die vorzugsweise von oben erfolgt und störendes Fremdlicht darstellt, kann so auf den Empfängern minimiert werden.

Durch die verbesserten Eigenschaften, insbesondere durch das verbesserte Verhältnis zwischen sensitiver Fläche und Auflagefläche, kann die Auflagefläche des Sensors verringert werden, wodurch sich die äußeren Abmessungen des Sensors auf der Scheibe reduzieren. Besonders vorteilhaft ist dabei, daß durch die trapezförmige Anordnung der Sender und Empfänger die äußeren Abmessungen des Sensorgehäuses trotzdem rechteckig gewählt werden können, so daß die Grundfläche unter optimaler Ausnutzung der Auflagefläche des Lichtleitkörpers in diese angeordnet werden kann. Eine rechteckige Auflagefläche bzw. Gehäuse wirkt sich darüber hinaus kostenreduzierend bei der Fertigung aus. Außerdem stellt die kleinere Auflagefläche des Lichtleitkörpers einen wesentlichen Montagevorteil dar, da bei konstanter Anpreßkraft der Anpreßdruck steigt und damit eine störende Blasenbildung zwischen dem Koppelmedium und der Scheibe vermieden werden kann. Hier ist es auch möglich, durch eine leichte Wölbung der der Scheibe zugewandten Fläche des Lichtleitkörpers an den Lichtein- und/oder Lichtaustrittsflächen gezielt den Flächendruck partiell zu erhöhen.

Weiterhin erweist es sich als vorteilhaft, daß in der Anordnung jeweils zwei Sender bzw. zwei Empfänger auf den sich gegenüberliegenden parallelen Seiten angeordnet sind. Da nun vier Meßstrecken, d.h. vier sensitive Flächen des Sensors mit lediglich je zwei Sendern und Empfängern realisiert sind, ergibt sich ein wesentlicher Kostenvorteil.

### Zeichnung

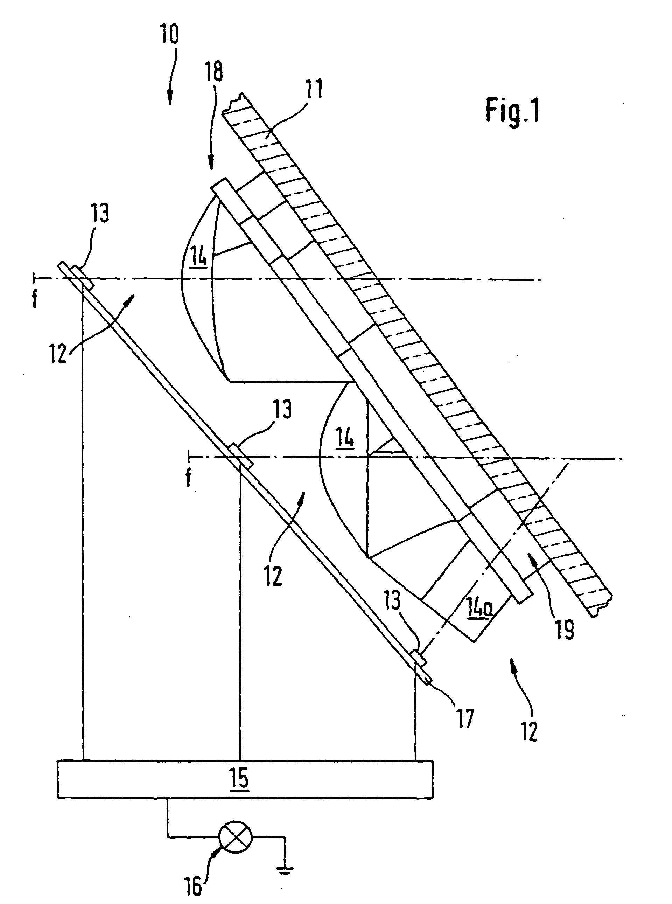

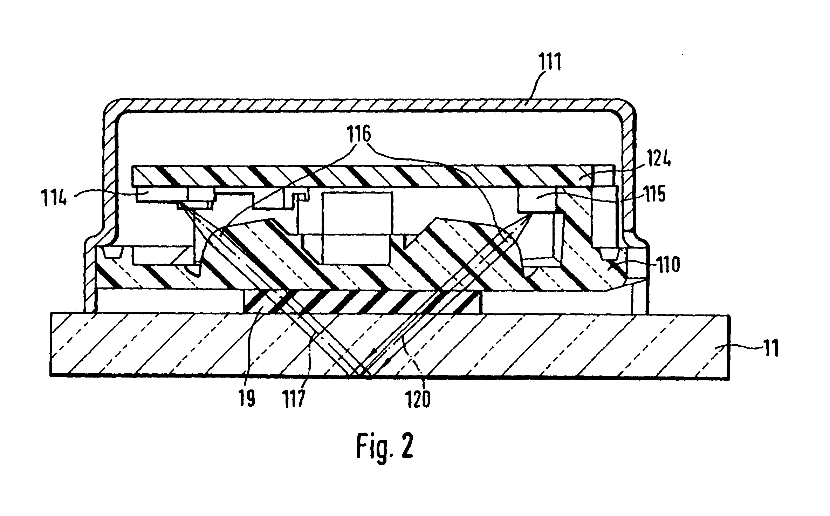

Ein Ausführungsbeispiel der Erfindung ist in den Figuren 1 und 2 dargestellt und in der nachfolgenden Beschreibung näher erläutert. Es zeigen:
Figur 1 einen Schnitt durch eine erfindungsgemäße Sensoreinheit,
Figur 2 eine Darstellung der Sensoreinheit integriert in einen Lichtleitkörper eines Regensensors in perspektivischer Darstellung,
Figur 3 zeigt eine schematische Zeichnung der Konturen einer möglichen Ausführungsform der Regensensoreinrichtung.

### Beschreibung des Ausführungsbeispiels

Fig. 1 zeigt eine erfindungsgemäße Sensoreinheit 10, welche auf einer Scheibe 11, insbesondere einer Windschutzscheibe eines Kraftfahrzeuges angebracht ist. Die Sensoreinheit 10 besteht aus mehreren Sensoren 12, wobei jeder Sensor 12 ein Sensorelement 13 und ein Lichtleitelement 14, 14a umfaßt. Hier jedoch benutzen zwei Lichtleitelemente 14 gemeinsam ein Sensorelement 13, so daß sich drei lichtempfindliche Sensorelemente 13 mit vier Lichtleitelementen 14 und 14a ergeben. Der Lichtleitkörper, auf dem die Lichtleitelemente 14, 14a aufgebracht sind besteht aus einer zumindest teilweise lichtdurchlässigen Platte die zylindrische Ausformungen aufweist, welche mit linsenförmigen Rundungen abgeschlossen sind. Diese zylindrischen Ausformungen bilden mit den linsenförmigen Rundungen jeweils ein Lichtleitelement 14, 14a. Tritt paralleles Licht entlang der Mittelachse der zylindrischen Ausformungen durch die linsenförmigen Rundungen, ergibt sich ein Brennpunkt f der eine Brennweite des Lichtleitelements 14, 14a charakterisiert.

Die Sensorelemente 13 sind jeweils zwischen den Brennpunkten f der Lichtleitelemente 14 sowie den Lichtleitelementen 14 selbst angeordnet. Dadurch ergeben sich in Fahrtrichtung nach vorne gerichtete Lichterfassungskegel welche eine Detektion in vorbestimmten Richtungen zulassen. Über den Abstand zwischen den Brennpunkten f des jeweils zugehörigen Lichtleitelements 14 und den lichtempfindlichen Sensorelementen 13 kann der Öffnungswinkel des Lichterfassungskegels eingestellt werden.

Eine Auswerteeinrichtung 15 steuert das Schalten einer Beleuchtungseinrichtung 16 in Abhängigkeit der Signale von den Sensorelementen 13. Die Sensorelemente 13 können gemeinsam auf einer Platine 17 aufgebracht sein und sind vorzugsweise so ausgelegt, daß sie Tageslicht und Kunstlicht unterscheiden können, um ein Abschalten durch die Kunstlichtbeleuchtung, beispielsweise in einem Tunnel, zu verhindern. Dies kann durch geeignete Wahl des Sensitivitätsbereichs der Sensorelemente 13 bewirkt werden. Es ist auch möglich den Sensitivitätsbereich so zu wählen, daß bestimmte Spektralbereiche oder charakteristische Linien, beispielsweise von Gasentladungslampen, erkannt werden und so eine Steuerung von Fern- und Abblendlicht bei einem Kraftfahrzeug ermöglicht wird.

Neben dieser Richtungssensorik ist mindestens ein Lichtleitelement 14a nicht notwendigerweise in Fahrtrichtung nach vorne ausgerichtet. Der Lichterfassungskegel dieses mindestens einen Lichtleitelements 14a weist einen sehr großen Öffnungswinkel auf und erfaßt die globalen Lichtverhältnisse außerhalb des Fahrzeugs.

Sämtliche Lichtleitelemente 14, 14a, insbesondere auch die Sensoren die der Richtungssensorik und der Globalsensorik, sind zu einem Lichtleitkörper 18 einstückig verbunden. Dieser Lichtleitkörper 18 kann beispielsweise als Spritzgußteil aus einem klarsichtigen oder UV durchlässigen Kunststoff hergestellt sein. Ebenso ist es möglich den Lichtleitkörper 18 aus einem gefärbten oder beschichteten Kunststoff herzustellen, welcher eine eventuell gewünschte Filterwirkung zur Beeinflussung des Sensitivitätsbereichs des Sensors beinhaltet. Dieser Lichtleitkörper wird über ein Koppelmedium 19, beispielsweise ein Silikonkissen, auf die Scheibe gedrückt. Das Koppelmedium 19 verhindert Lufteinschlüsse zwischen Scheibe 11 und Lichtleitkörper 18, die eine unerwünschte Streuung verursachen würden. Es ist ferner möglich das Koppelmedium 19 in einem Mehrkomponenten-Spritzgußverfahren direkt bei der Herstellung des Lichtleitkörpers 18 auf demselben aufzubringen.

Dieser Lichtleitkörper 18 ist integraler Bestandteil eines Lichtleitkörpers 110 einer Regensensoreinrichtung.

Figur 2 zeigt einen Lichtleitkörper 110 einer im Schnitt dargestellten Regensensoreinrichtung mit einem Sensorgehäuse 111. Die Auflagefläche des Lichtleitkörpers 110 ist beispielsweise durch den Kontakt desselben über das Koppelmedium 19, z. B. ein Silikonkissen mit der Scheibe 11 gegeben. Allgemein entsprechen die äußeren Abmessungen des Lichtleitkörpers 110 etwa den Längen- und BreitenAbmessungen der Sensoreinheit, dabei kann das Sensorgehäuse

111 auch bauchig über die kontaktierte Auflagefläche des Lichtleitkörpers 110 auf der Scheibe 11 überstehen und darin verschiedene Elemente der Sensoreinheit, insbesondere Sender 114 und Empfänger 115, sowie eine Schaltungsplatine 124 aufnehmen.

Die Sensoreinheit ist beispielsweise auf der Innenseite der Scheibe 11, beispielsweise einer Frontscheibe eines Kraftfahrzeugs, befestigt. Nicht dargestellt ist die Befestigung des Sensorgehäuses 111 mit der Scheibe 11. Vorzugsweise ist der Lichtleitkörper 110 oder das Sensorgehäuse 111 durch Pressung auf der Scheibe 11 befestigt, wobei der Lichtleitkörper 110 die Funktion innehat, ein von einem Sender 114 abgestrahltes Senderlicht 117 in die Scheibe 11 einzukoppeln und das in der Scheibe 11 durch Totalreflektion oder Reflektion umgelenkte Senderlicht 120 an einer anderen vorbestimmten Stelle auf einen Empfänger 115 auszukoppeln. Dies geschieht hier an optischen Elementen 116, die als Linsen am Lichtleitkörper befestigt, vorzugsweise angeformt sind und die Strahlen des Senderlichtes 117, 120 in die gewünschte Richtung bündeln, ab- oder umlenken.

Oberhalb des Lichtleitkörpers 110 ist in der dargestellten Schnittebene mindestens ein Licht ausstrahlender Sender 114 und ein Licht detektierende Empfänger 115 innerhalb des Sensorgehäuses 111 befestigt. Als Sender sind vorzugsweise Licht-emitierende-Dioden (LED) als Empfänger vorzugsweise Licht-detektierende-Dioden (LRD) zu verwenden, wobei die Senderstrahlung des Lichtes im infraroten (IR) oder im visuellen Bereich (VIS) liegt, jedoch sind auch beliebig andere Frequenzbereiche möglich. Als Empfänger kann auch ein in seinem Aufbau einer Leuchtdiode entsprechendes Empfängerelement verwendet werden, wodurch eine optimale Frequenzanpassung zwischen Sender 114 und Empfänger 115 erreicht werden kann. Als Material des Lichtleitkörpers 110 wird ein werkstoff, hier ein Kunststoff gewählt, der für die Sendefrequenz der lichtemittierenden Dioden (LED) zwar transparent, für störendes Fremdlicht jedoch opak ist.

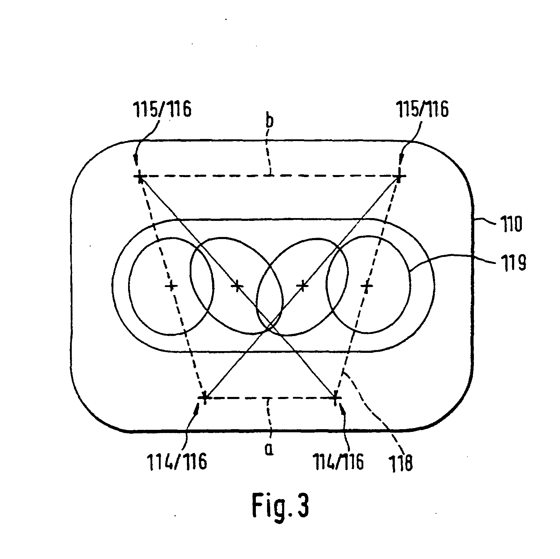

In Figur 3 ist eine mögliche Anordnung der Sender 114 und Empfänger 115 zu sehen. Die Sender 114 und Empfänger 115 der Sensoreinheit, sind nahe den optischen Elementen 116 aus Figur 2 plaziert. Sender 114, Empfänger 115 und die jeweils dazugehörigen optischen Elemente 116 spannen eine gestrichelt angedeutete Grundfläche 118 auf, welche einem Trapez entspricht.

Auf einer ersten Parallelen des Trapezes sind zwei optische Elemente 116 nahe jeweils eines Senders 114 angeordnet. Dadurch, daß die optischen Elemente 116 hier als jeweils zwei nebeneinander angeordnete Linsen ausgebildet sind, ergeben sich für jeden Sender 114 zwei Meßstrecken in zwei Richtungen. Analog dazu sind die Empfänger 115 angeordnet. Die optischen Elemente 116 bestehen beispielsweise aus Linsen oder Spiegeln, welche auch ineinander übergehen können. Auch eine Lösung mit nur jeweils einer Linse ist möglich, da durch entsprechende Wahl der Abstände a und b der trapezförmigen Grundfläche 118 die entstehenden Fehlwinkel gering gehalten werden können.

Die Abstände a bzw. b zwischen den Sendern 114 und den Empfängern 115 sind durch die Wellenlänge der emittierenden Strahlung der Sender 114, die Dicke der Scheibe 11 und des Lichtleitkörpers 110, dem Brechungsindex der Scheibe 11, dem Eintrittswinkel und der Eintrittsstelle des Senderlichtes 117 in die Scheibe 11 bestimmt. Die Abstände sind derart gewählt, daß die in der Scheibe 11 eingekoppelte Strahlung des Senderlichts 117 je Meßstrecke ein einziges Mal an der außenliegenden Oberfläche der Scheibe 11 totalreflektiert wird und anschließend aus der Scheibe 11 ausgekoppelt und zum Empfänger 115 geleitet wird.

Die skizzierte sensitive Fläche 119 entspricht den Bereichen auf der benetzbaren Seite der Scheibe 11, an denen die Totalreflektion der Strahlung des Senderlichtes 117 bei unbenetzter Scheibe 11 erfolgt. Je nach Anordnung der Sender 114 und Empfänger 115 zur Scheibe 11, der Dicke der Scheibe 113 und der Form der optischen Elemente 116 haben die Reflexionsflächen des Senderlichtes 117 einen bestimmten Durchmesser. Die benannten Parameter sollen erfindungsgemäß jedoch so groß sein, daß aus den einzelnen Reflexionsflächen eine annähernd zusammenhängende sensitive Fläche 119 entsteht. Dies wird erfindungsgemäß dadurch erreicht, daß die Schnittpunkte der Mittelachsen der Strahlungskegel 120 der Sender 114 mit der benetzbaren Seite der Scheibe 11 auf einer Geraden liegen und etwa gleichen Abstand haben.

Bei mehr als einer gewünschten Totalreflektion an der benetzbaren Außenseite der Scheibe 11 ist der Abstand a bzw. b der Sender 114 und Empfänger 115 bzw. der jeweils zugehörigen optischen Elemente 116 entsprechend größer zu wählen und das Koppelmedium 19 nur an den Ein- und Auskoppelbereichen des Lichtes an der Scheibe 11 anzubringen.

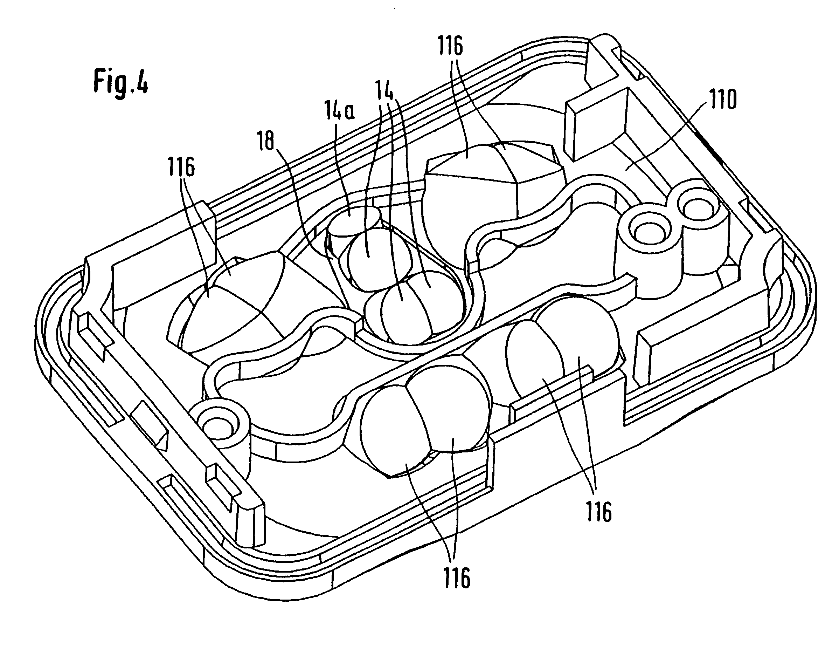

In Figur 4 ist der Lichtleitkörper 110 der erfindungsgemäßen Sensoreinheit nach Fig. 2 dargestellt. Da das Trapez aus Sendern 114 und Empfängern 115 eine kürzere und eine längere Parallele umfaßt, ist - etwas aus dem Zentrum in Richtung der längeren Parallelen hin verschoben - der Lichtleitkörper 18 der Sensoreinheit 10 für eine automatische Lichtsteuerung des Kraftfahrzeugs angeordnet. Dieser Lichtleitkörper 18 ist aus einem lichtdurchlässigem Material gefertigt, dessen Transparenzbereich im visuellen Bereich liegt.

Der Lichtleitkörper 110 und die Lichtleitkörper 18 sind einteilig, beispielsweise in einem Mehrkomponenten-Spritzgußverfahren hergestellt, jedoch ist auch eine Ausbildung aus mehreren Einzelteilen möglich, wobei in diesem Fall der Lichtleitkörper 18 in eine entsprechende Aussparung des Lichtleitkörpers 110 eingesetzt ist.

Als Material für den Lichtleitkörper 110 dient häufig Plexiglas (PMMA), da es kostengünstig und gut zu verarbeiten ist. Da jedoch Transparenz nur im Bereich des Senderlichts benötigt wird, ist auch ein anderer Kunststoff denkbar. Besonders geeignet ist auch ein Lichtleitkörpermaterial welches sich beispielsweise durch ein chemisches oder physikalisches Verfahren auf der der Scheibe 11 zugewandten Seite weichere und elastischere Eigenschaften aufweist als auf der der Scheibe 11 abgewandten Seite, da so das Koppelmedium 19 eingespart werden kann.

Um die Filtereigenschaften des Lichtleitkörpers 110 zu erreichen, können dem Material während des Herstellungprozesses des Lichtleitkörpers 110 bestimmte Stoffe, insbesondere Rußpartikel, räumlich selektiv zugesetzt werden. So können beispielsweise nur die zur Funktion benötigten Bereiche für das Senderlicht 117 durchlässig sein. Eine analoge Vorgehensweise ist auch für das Koppelmedium 19 möglich.

In weiteren Varianten werden an jedem Eckpunkt des Trapezes ein Sender 114 und ein Empfänger 115 plaziert oder nur ein Sender 114 für das gesamte Trapez zu verwendet, wobei dann die optischen Elemente 116 reflektierende Eigenschaften aufweisen um trotzdem an mehreren Eckpunkten des Trapezes Senderlicht 117 in die Scheibe 11 einkoppeln zu können.

Sinnvoll ist es auch, für den integrierten Lichtleitkörper 18,110 eine spezielle Heizung vorzusehen um die Meßstrecke und/oder den Lichtleitkörper 18,110 zu beheizen. Diese Heizung kann beispielsweise als Heizelement auf dem Lichtleitkörper angeordnet sein oder aber mittels in den Lichtleitkörper 18 und/oder 110 integrierten Heizwendeln, Heizdrähten oder ähnlichem realisiert sein. Unproblematisch ist dies, wenn der Lichtleitkörper 18,110 homogen ausgebildet ist. Werden dagegen verschiedene Kunststoffe beispielsweise in einem mehrkomponenten Spritzgußverfahren verwendet, müssen die Ausdehnungskoeffizienten der verschiedenen Kunststoffe entsprechend ausgewählt werden um Spannungen oder gar Risse im Lichtleitkörper 18,110 zu vermeiden. Dazu können auch andere Maßnahmen, wie beispielsweise eine vorteilhafte Anordnung der Heizelemente oder -drähte, ergriffen werden.

## Patentansprüche

1. Lichtempfindliche Sensoreinheit (10), insbesondere zum automatischen Schalten von Beleuchtungseinrichtungen, vorzugsweise von Kraftfahrzeugen, welche mindestens zwei lichtempfindliche Sensoren (12) umfaßt, denen Lichtleitelemente (14, 14a) zugeordnet sind, die eine vorbestimmbare Empfangscharakteristik aufweisen, wobei mindestens ein erster Sensor (12) und ein zweiter Sensor (12) die Lichtverhältnisse in mindestens zwei vorbestimmten Richtungen detektieren, **dadurch gekennzeichnet, daß** die den Sensoren (12) zugeordneten Lichtleitelemente (14,14a) zu einem Lichtleitkörper (18) einstückig verbunden sind wobei der Lichtleitkörper (18) in einen Lichtleitkörper einer Regensensoreinrichtung (110), insbesondere einteilig integriert ist.

2. Sensoreinheit nach Anspruch 1, **dadurch gekennzeichnet, daß** mindestens drei Sensoren (12) Licht aus vorbestimmten Richtungen detektieren.

3. Sensoreinheit nach einem der Ansprüche 1 oder 2, **dadurch gekennzeichnet, daß** mindestens ein Sensor (12) mit vorbestimmter Richtung in Fahrtrichtung eines Fahrzeugs ausgerichtet ist.

4. Sensoreinheit nach einem oder mehreren der Ansprüche 1 bis 3, **dadurch gekennzeichnet, daß** mindestens ein Sensor (12), der die Lichtverhältnisse in vorbestimmter Richtung detektiert, mit einer Geraden in Fahrtrichtung eines Fahrzeuges, einen winkel α einschließt.

5. Sensoreinheit nach Anspruch 4, **dadurch gekennzeichnet, daß** zwei Sensoren (12) beidseitig je einen Winkel α mit einer in Fahrtrichtung weisenden Geraden einschließen und ein gemeinsames lichtempfindliches Sensorelement (13) aufweisen.

6. Sensoreinheit nach einem der Ansprüche 1-5, **dadurch gekennzeichnet, daß** die Lichtleitelemente (14,14a) ineinander übergehen.

7. Sensoreinheit nach einem der vorhergehenden Ansprüche, **dadurch gekennzeichnet, daß** die Lichterfassungskegel der Lichtleitelemente (14,14a) überlappt sind.

8. Sensoreinheit nach einem der vorhergehenden Ansprüche, **dadurch gekennzeichnet, daß** die Sensorelemente (13) als Tages- und Kunstlicht unterscheidende Sensorelemente (13) ausgebildet sind.

9. Sensoreinheit nach einem der vorhergehenden Ansprüche, **dadurch gekennzeichnet, daß** die Auswerteeinrichtung (15) als Tages- und Kunstlicht unterscheidende Auswerteeinrichtung (15) ausgebildet ist.

10. Sensoreinheit nach Anspruch 1, **dadurch gekennzeichnet, daß** der Lichtleitkörper (18,110) in einem Mehrkomponenten- Spritzgußverfahren, insbesondere zusammen mit dem Lichtleitkörper des Regensensors und einem Koppelmedium (19), hergestellt ist.

11. Sensoreinheit nach einem oder mehreren der vorhergehenden Ansprüche, **dadurch gekennzeichnet, daß** der Regensensor mindestens einen Sender (114), mindestens einen Empfänger (115) und mindestens einen Lichtleitkörper (110) zwischen Scheibe (11) und Sender(114) bzw. Empfänger (115) aufweist und die Abbildungen der Sender (114) und der Empfänger (115) durch Projektion auf die Scheibe (11) die Eckpunkte eines Trapezes bilden.

12. Sensoreinheit nach Anspruch 11, **dadurch gekennzeichnet, daß** zwischen Sender (114) und Empfänger (115) die Strahlung mindestens einmal an einer Fläche der Scheibe (11) reflektiert wird, wobei der mindestens eine Sender (114) Strahlung in verschiedene Richtungen abgibt und die dadurch entstehenden Reflexionsflächen eine zumindest annähernd zusammenhängende sensitive Fläche (119) ergeben.

13. Sensoreinheit nach Anspruch 11, **dadurch gekennzeichnet, daß** mindestens ein Sender (114) Strahlung in zwei Richtungen auf zwei Empfänger (115) ausstrahlt.

14. Sensoreinheit nach Anspruch 11, **dadurch gekennzeichnet, daß** mindestens ein Empfänger (115) Strahlung aus zwei Richtungen von zwei Sendern (114) empfängt.

15. Sensoreinheit nach einem oder mehreren der Ansprüche 11 bis 14, **dadurch gekennzeichnet, daß** die Anzahl der Sender (114) und Empfänger (115) jeweils zwei beträgt.

16. Sensoreinheit nach Anspruch 15, **dadurch gekennzeichnet, daß** das Trapez ein symmetrisches Trapez ist wobei die Abstände der zwei Sender (114) von den Abständen der zwei Empfänger (115) so verschieden sind, daß der eine Abstand etwa das doppelte des anderen Abstands beträgt.

17. Sensoreinheit nach einem oder mehreren der Ansprüche 11 bis 16, **dadurch gekennzeichnet, daß** die Regensensoreinrichtung vier Meßstrecken aufweist.

18. Sensoreinheit nach Anspruch 16, **dadurch gekennzeichnet, daß** die Sender (114) auf der ersten, in Einbaulage unteren Parallelen und die Empfänger (115) auf der zweiten, in Einbaulage oberen Parallelen des Trapezes angeordnet sind.

19. Sensoreinheit nach einem oder mehreren der Ansprüche 11 bis 18, **dadurch gekennzeichnet, daß** die Zentren der Reflexionsflächen der Strahlungskegel (120) des mindestens einen Senders (114) in der Scheibe (113) in einem zumindest annähernd gleichen Abstand nebeneinander angeordnet sind, vorzugsweise auf einer Linie, welche sich zwischen den beiden Parallelen des Trapezes befindet.

20. Sensoreinheit nach einem oder mehreren der Ansprüche 11 bis 19, **dadurch gekennzeichnet, daß** Lichtleitkörper (110), Sender (114) und Empfänger (115) derart ausgebildet und angeordnet sind, daß in der Scheibe (11) lediglich eine einzige Totalreflexion des Senderlichtes (117) auftritt.

21. Sensoreinheit nach einem oder mehreren der Ansprüche 11 bis 20, **dadurch gekennzeichnet, daß** jeweils einem Sender (114) bzw. Empfänger (115) am Lichtleitkörper (110) ein optisches Element (116) zugeordnet ist, welches mehrere, insbesondere zwei, getrennte Linsen aufweist.

22. Sensoreinheit nach Anspruch 21, **dadurch gekennzeichnet, daß** die Linsen ineinander übergehen.

23. Sensoreinheit nach einem einem oder mehreren der Ansprüche 11 bis 20, **dadurch gekennzeichnet, daß** jeweils einem Sender (114) bzw. Empfänger (115) am Lichtleitkörper (110) ein optisches Element (116) zugeordnet ist, welches eine einzige Linse aufweist.

24. Sensoreinheit nach Anspruch 1, **dadurch gekennzeichnet, daß** der erste Sensor (12) das globale Umgebungslicht und der zweite Sensor (12) das Licht aus einer vorbestimmten Richtung detektiert.

25. Sensoreinheit nach einem oder mehreren der vorhergehenden Ansprüche, **dadurch gekennzeichnet, daß** die Sensoreinheit (10) eine den integrierten Lichtleitkörper (18,110) beheizenden Heizeinrichtung versehen ist.

26. Sensoreinheit nach Anspruch 25, **dadurch gekennzeichnet, daß** die Heizeinrichtung aus einem Heizelement besteht, das mit dem integrierten Lichtleitkörper (18,110) in Kontakt steht, oder im Lichtleitkörper (18,110) integriert ist.

27. Sensoreinheit nach Anspruch 10, **dadurch gekennzeichnet, daß** die Komponenten des Spritzgußverfahrens bezüglich ihrer Wärmeausdehnungskoeffizienten angepaßt sind.

## Claims

1. Light-sensitive sensor unit (10), especially for automatic switching of lighting devices, preferably of motor vehicles, which comprise at least two light-sensitive sensors (12) which are assigned light-guiding elements (14, 14a) which have a predeterminable reception characteristic, at least a first sensor (12) and a second sensor (12) detecting the lighting conditions in at least two predetermined directions, **characterized in that** the light-guiding elements (14, 14a) assigned to the sensors (12) are connected in one piece to the light-guiding body (18), the light-guiding body (18) being integrated, especially in unipartite fashion, in a light-guiding body of a rain sensor device (110).

2. Sensor unit according to claim 1, **characterized in that** at least three sensors (12) detect light from predetermined directions.

3. Sensor unit according to one of Claims 1 or 2, **characterized in that** at least one sensor (12) with a predetermined direction is aligned in the driving direction of a vehicle.

4. Sensor unit according to one or more of Claims 1 to 3, **characterized in that** at least one sensor (12), which detects the lighting conditions in a predetermined direction, encloses an angle α with a straight line in the driving direction of a vehicle.

5. Sensor unit according to Claim 4, **characterized in that** two sensors (12) enclose an angle α in each case on both sides with a straight line pointing in the driving direction, and have a common light-sensitive sensor element (30).

6. Sensor unit according to one of Claims 1-5, **characterized in that** the light-guiding elements (14, 14a) merge into one another.

7. Sensor unit according to one of the preceding claims, **characterized in that** the light-detecting cones of the light-guiding elements (14, 14a) are overlapped.

8. Sensor unit according to one of the preceding claims, **characterized in that** the sensor elements (13) are designed as sensor elements (13) which distinguish daylight and artificial light.

9. Sensor unit according to one of the preceding claims, **characterized in that** the evaluation device (15) is designed as an evaluation device (15) which distinguishes daylight and artificial light.

10. Sensor unit according to Claim 1, **characterized in that** the light-guiding body (18, 110) is produced using a multicomponent injection moulding method, in particular together with the light-guiding body of the rain sensor and a coupling medium (19).

11. Sensor unit according to one or more of the preceding claims, **characterized in that** the rain sensor has at least one transmitter (114), at least one receiver (115) and at least one light-guiding body (110) between the pane (11) and transmitter (114) or receiver (115), and the images of the transmitter (114) and the receiver (115) are projected onto the pane (11) to form the corner points of a trapezium.

12. Sensor unit according to Claim 11, **characterized in that** the radiation is reflected at least once at a surface of the pane (11) between the transmitter (114) and receiver (115), the at least one transmitter (114) emitting radiation in various directions, and the reflection surfaces thereby produced yielding an at least approximately coherent sensitive surface (119).

13. Sensor unit according to Claim 11, **characterized in that** at least one transmitter (114) emits radiation in two directions onto two receivers (115).

14. Sensor unit according to Claim 11, **characterized in that** at least one receiver (115) receives radiation from two directions from two transmitters (114).

15. Sensor unit according to one or more of Claims 11 to 14, **characterized in that** the number of transmitters (114) and receivers (115) is two in each case.

16. Sensor unit according to Claim 15, **characterized in that** the trapezium is a symmetrical trapezium, the distances of the two transmitters (114) differing from the spacings of the two receivers (115) such that one spacing is approximately twice as large as the other spacing.

17. Sensor unit according to one or more of Claims 11 to 16, **characterized in that** the rain sensor device has four measurement sections.

18. Sensor unit according to Claim 16, **characterized in that** the transmitters (114) are arranged on the first parallels of the trapezium, the lower ones in the installed position, and the receivers (115) are arranged on the second parallels of the trapezium, the upper ones in the installed position.

19. Sensor unit according to one or more of Claims 11 to 18, **characterized in that** the centres of the reflection surfaces of the radiation cone (120) of the at least one transmitter (114) are arranged next to one another in the pane (113) at an at least approximately identical spacing, preferably on a line which is located between the two parallels of the trapezium.

20. Sensor unit according to one or more of Claims 11 to 19, **characterized in that** the light-guiding body (110), transmitters (114) and receivers (115) are designed and arranged in such a way that only a single total reflection of the transmitter light (117) occurs in the pain (11).

21. Sensor unit according to one or more of Claims 11 to 20, **characterized in that** in each case a transmitter (114) or receiver (115) on the light-guiding body (110) is assigned an optical element (116) which has a plurality of, in particular two, separate lenses.

22. Sensor unit according to Claim 21, **characterized in that** the lenses merge into one another.

23. Sensor unit according to one or more of Claims 11 to 20, **characterized in that** in each case a transmitter (114) or receiver (115) on the light-guiding body (110) is assigned an optical element (116) which has a single lens.

24. Sensor unit according to Claim 1, **characterized in that** the first sensor (12) detects the global ambient light, and the second sensor (12) detects the light from a predetermined direction.

25. Sensor unit according to one or more of the preceding claims, **characterized in that** the sensor unit (10) is provided with a heating device which heats the integrated light-guiding body (18, 110).

26. Sensor unit according to Claim 25, **characterized in that** the heating device comprises a heating element which is in contact with the integrated light-guiding body (18, 110), or is integrated in the light-guiding body (18, 110).

27. Sensor unit according to Claim 10, **characterized in that** the components of the injection moulding method are matched with reference to their coefficients of thermal expansion.

## Revendications

1. Unité de détection photosensible (10), en particulier pour l'enclenchement automatique d'ensembles d'éclairage, de préférence pour véhicules automobiles, qui comprend au moins deux capteurs photosensibles (12) auxquels sont associés des éléments conducteurs de lumière (14, 14a) qui présentent une caractéristique de réception prédéterminable, au moins un premier capteur (12) et un second capteur (12) détectant les rapports de lumière dans au moins deux directions prédéterminées,
**caractérisée en ce que**
les éléments conducteurs de lumière (14, 14a) associés aux capteurs (12) sont d'une seule pièce avec un corps conducteur de lumière (18), le corps conducteur de lumière (18) étant intégré dans un corps de circuit de lumière d'un ensemble de détection de pluie (110), en particulier d'une seule pièce.

2. Unité de détection selon la revendication 1,
**caractérisée en ce qu'**
au moins trois capteurs (12) détectent la lumière à partir de directions prédéterminées.

3. Unité de détection selon l'une des revendications 1 ou 2,
**caractérisée en ce qu'**
au moins un capteur (12) est orienté avec une direction prédéterminée dans la direction de conduite d'un véhicule.

4. Unité de détection selon une ou plusieurs des revendications 1 à 3,
**caractérisée en ce qu'**
au moins un capteur (12) qui détecte les rapports de lumière dans une direction prédéterminée fait un angle α avec une droite dans la direction de conduite d'un véhicule.

5. Unité de détection selon la revendication 4,
**caractérisée en ce que**
deux capteurs (12) font des deux côtés respectivement un angle α avec une droite dirigée dans la direction de conduite et présentent un élément capteur photosensible (13) commun.

6. Unité de détection selon l'une des revendications 1 à 5,
**caractérisée en ce que**
les conducteurs de lumière (14, 14a) passent l'un dans l'autre.

7. Unité de détection selon l'une des revendications précédentes,
**caractérisée en ce que**
les cônes de détection de lumière des éléments conducteurs de lumière (14, 14a) se chevauchent.

8. Unité de détection selon l'une des revendications précédentes,
**caractérisée en ce que**
les éléments de capteur (13) sont configurés comme des éléments de capteur (13) différenciant la lumière du jour et la lumière artificielle.

9. Unité de détection selon l'une des revendications précédentes,
**caractérisée en ce que**
l'unité d'exploitation (15) est configurée comme une unité d'exploitation (15) différenciant la lumière du jour et la lumière artificielle.

10. Unité de détection selon la revendication 1,
**caractérisée en ce que**
le corps conducteur de lumière (18, 110) est fabriqué dans un procédé de moulage par injection de plusieurs composants, en particulier à la fois avec le corps conducteur de lumière du capteur de pluie et avec un fluide de couplage (19).

11. Unité de détection selon une ou plusieurs des revendications précédentes,
**caractérisée en ce que**
le capteur de pluie présente au moins un émetteur (114), au moins un récepteur (115) et au moins un corps conducteur de lumière (110) entre
la vitre (11) et l'émetteur (114), ou respectivement le récepteur (115), et les reproductions de l'émetteur (114) et du récepteur (115) forment les points d'angle d'un trapèze par projection sur la vitre (11).

12. Unité de détection selon la revendication 11,
**caractérisée en ce qu'**
entre l'émetteur (114) et le récepteur (115), le rayonnement est réfléchi au moins une fois sur une surface de la vitre (11), le, au moins un, capteur (114) émettant un rayonnement dans différentes directions et les surfaces réfléchissantes ainsi obtenues produisent une surface (119) sensible au moins à peu près continue.

13. Unité de détection selon la revendication 11,
**caractérisée en ce qu'**
au moins un émetteur (114) émet un rayonnement dans deux directions sur deux récepteurs (115).

14. Unité de détection selon la revendication 11,
**caractérisée en ce qu'**
au moins un récepteur (115) reçoit un rayonnement de deux directions de deux émetteurs (114).

15. Unité de détection selon une ou plusieurs des revendications 11 à 14,
**caractérisée en ce que**
le nombre d'émetteurs (114) et de récepteurs (115) est respectivement de deux.

16. Unité de détection selon la revendication 15,
**caractérisée en ce que**
le trapèze est un trapèze symétrique dans lequel les distances des deux émetteurs (114) par rapport aux distances des deux récepteurs (115) sont différentes de telle sorte que l'une des distances correspond à peu près au double de l'autre distance.

17. Unité de détection selon une ou plusieurs des revendications 11 à 16,
**caractérisée en ce que**
l'ensemble de détection de pluie présente quatre séquences de mesure.

18. Unité de détection selon la revendication 16,
**caractérisée en ce que**
les émetteurs (114) sont disposés sur les premières parallèles inférieures du trapèze dans la situation de montage et les récepteurs (115) sur les secondes parallèles supérieures dans la situation de montage.

19. Unité de détection selon une ou plusieurs des revendications 11 à 18,
**caractérisée en ce que**
les centres des surfaces réfléchissantes du cône de rayonnement (120) du, au moins d'un, émetteur (114) dans la vitre (113) sont disposés les uns à côté des autres à une distance au moins à peu près égale, de préférence sur une ligne qui se trouve entre les deux parallèles du trapèze.

20. Unité de détection selon une ou plusieurs des revendications 11 à 19,
**caractérisée en ce que**
le corps conducteur de lumière (110), l'émetteur (114) et le récepteur (115) sont configurés et disposés de telle sorte que seul un réfléchissement complet de la lumière de l'émetteur (117) pénètre dans la vitre (11).

21. Unité de détection selon une ou plusieurs des revendications 11 à 20,
**caractérisée en ce qu'**
un élément optique (116) est associé respectivement à un émetteur (114), respectivement à un récepteur (115) sur le corps conducteur de lumière (110), lequel élément présente plusieurs, en particulier deux, lentilles distinctes.

22. Unité de détection selon la revendication 21,
**caractérisée en ce que**
les lentilles se chevauchent l'une l'autre.

23. Unité de détection selon une ou plusieurs des revendications 11 à 20,
**caractérisée en ce qu'**
un élément optique (116) est associé chaque fois à un émetteur (114) ou à un récepteur (115), sur le corps conducteur de lumière (110), lequel élément présente une seule lentille.

24. Unité de détection selon la revendication 1,
**caractérisée en ce que**
le premier capteur (12) détecte la lumière ambiante globale et le second capteur (12) détecte la lumière d'une direction prédéterminée.

25. Unité de détection selon une ou plusieurs des revendications précédentes,
**caractérisée en ce que**
sur l'unité de détection (10), est prévu un ensemble de chauffage pour chauffer le corps conducteur de lumière intégré (18, 110).

26. Unité de détection selon la revendication 25,
**caractérisée en ce que**
l'ensemble de chauffage comprend un élément de chauffage qui est en contact avec le corps conducteur de lumière (18, 110) intégré ou est intégré dans le corps conducteur de lumière (18, 110).

27. Unité de détection selon la revendication 10,
**caractérisée en ce que**
les composants du procédé de moulage par injection sont adaptés par rapport à leurs coefficients de dilatation thermique.
